Europäisches Patentamt

European Patent Office

Office européen des brevets

(19)

(11) Publication number: **0 508 801 B1**

(12) **EUROPEAN PATENT SPECIFICATION**

(45) Date of publication of patent specification: **01.02.95**   (51) Int. Cl.[6]: **C08L 23/16**, C08L 23/10

(21) Application number: **92303198.3**

(22) Date of filing: **10.04.92**

(54) **Thermoplastic elastomer powder composition for powder molding, powder molding method using the same and molded article thereof.**

(30) Priority: **11.04.91 JP 78975/91**

(43) Date of publication of application:
**14.10.92 Bulletin 92/42**

(45) Publication of the grant of the patent:
**01.02.95 Bulletin 95/05**

(84) Designated Contracting States:
**DE FR GB IT NL**

(56) References cited:
**EP-A- 0 409 992**
**EP-A- 0 479 580**

**WORLD PATENTS INDEX LATEST Week 9014,
Derwent Publications Ltd., London, GB; AN
90-104961 & JP-A-2057309**

**WORLD PATENTS INDEX LATEST Week 9014,
Derwent Publications Ltd., London, GB; AN
90-104962 & JP-A-2057310**

**WORLD PATENTS INDEX LATEST Week 9137,
Derwent Publications Ltd., London, GB; AN
91-270317 & JP-A-31774477**

(73) Proprietor: **SUMITOMO CHEMICAL COMPANY,**

**LIMITED
5-33 Kitahama 4-chome
Chuo-ku
Osaka-shi
Osaka (JP)**

(72) Inventor: **Igarashi, Toshio**
**59, Shimogamomiyazaki-cho,**
**Sakyo-ku**
**Kyoto-shi,**
**Kyoto (JP)**
Inventor: **Shinohara, Sueharu**
**2-14-23, Matsugaoka**
**Takatsuki-shi,**
**Osaka (JP)**
Inventor: **Tatsumi, Masayuki**
**2-29-7, Oike**
**Ibaraki-shi,**
**Osaka (JP)**
Inventor: **Hikasa, Tadashi**
**6-3-48, Nagauraekimae**
**Sodegaura-shi,**
**Chiba (JP)**
Inventor: **Mendori, Hiroaki**
**1-9,Yushudainishi**
**Ichihara-shi,**
**Chiba (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

EP 0 508 801 B1

(74) Representative: **Cresswell, Thomas Anthony et al**
**J.A. Kemp & Co.**
**14 South Square**
**Gray's Inn**
**London WC1R 5LX (GB)**

**Description**

BACKGROUND OF THE INVENTION

1. Field of the Invention

The present invention relates to a thermoplastic elastomer powder composition for powder molding, a powder molding method using the same, and a molded article thereof.

2. Description of the Related Art

A powder molded article of a polyvinyl chloride powder composition containing a plasticizer is used for interior decorative materials of automobiles, for example, as a covering material for an instrument panel, a console box, an arm rest, a head rest and a door rim.

The molded article, however, has drawbacks in that the polyvinyl chloride has a poor lightweight property and poor non-pollution properties, because acidic substances generated by the thermal disposal of a motor vehicle cassation induce air pollution and acid rain, etc., and further, has drawbacks in that the plasticizer causes a clouding of the internal surface of a front window of automobiles. These drawbacks render the use of the above-mentioned molded article unsatisfactory.

The present inventors have studied ways in which to alleviate the drawbacks of the above-mentioned polyvinyl chloride powder composition, and previously proposed an olefin type thermoplastic elastomer powder for powder molding (see Japanese Patent Application Nos. 3-199579 and 3-199589).

Thereafter, the present inventors continued their studies, and as a result, encountered a problem that, although the thermoplastic elastomer powder exhibits a good flowability immediately after the preparation by pulverization, an aggregation occurs among the powder particles when the powder is allowed to stand for a long time, and thus the powder no longer exhibits the flowability necessary for powder molding.

Further, when use is made of a powder slush molding method, which comprises bringing a powder into contact with a heated mold to heat-fuse powder particles to each other and returning powder particles not subjected to heat fusing to a powder feed box, the repeated use of the powder not subjected to heat fusing causes the powder to be gradually heated, and this heat is stored in the powder feed box. This gradually causes an aggregation between powder particles to occur, which deteriorates the flowability of the powder, so that a continuous operation for a long time gives rise to the production of molded articles having an underfill and pin holes.

SUMMARY OF THE INVENTION

Accordingly, an object of the present invention is to eliminate the above-mentioned disadvantages and to provide a thermoplastic elastomer powder composition for powder molding capable of exhibiting a good powder flowability even after storage for a long time, and capable of providing a molded article having neither an underfill nor pin holes produced even when the molding is continuously conducted, for example, by powder slush molding, for a long time.

Other objects and advantages of the present invention will be apparent from the following description.

In accordance with the present invention, there is provided a thermoplastic elastomer powder composition for powder molding, comprising 100 parts by weight of the following thermoplastic elastomer powder (A) and 0.05 to 20 parts by weight of a fine powder having an average particle diameter of 30 $\mu$m or less:

(A)

(i) a powder of a thermoplastic elastomer comprising a composition composed of an ethylene-$\alpha$-olefin copolymer rubber and a polyolefin resin or

(ii) a powder of a thermoplastic elastomer comprising a partially crosslinked composition composed of an ethylene-$\alpha$-olefin copolymer rubber and a polyolefin resin, the thermoplastic elastomer powder having a complex dynamic viscosity $\eta^*(1)$ as measured at a frequency of 1 radian/sec and at 250°C of $1.5 \times 10^4$ Pa.s ($1.5 \times 10^5$ poise) or less and a Newtonian viscosity index n, calculated from the following formula by using the above-mentioned complex dynamic viscosity $\eta^*(1)$ and the complex dynamic viscosity $\eta^*(100)$ measured at a frequency of 100 radian/sec of 0.67 or less:

$$n = (\log\eta^*(1) - \log\eta^*(100))/2,$$

a powder molding method using the same, and a molded article thereof.

3

BRIEF DESCRIPTION OF THE DRAWINGS

The present invention will be better understood from the description set forth below with reference to the accompanying drawings, wherein:

Figure 1 is a plan view of a powder feed box;
Figure 2 is an elevation view of a mold;
Figure 3 is a side view of a powder feed box;
Figure 4 is a plan view of a mold;
Figure 5 is an elevation view of a mold;
and Figure 6 is a side view of a mold.

DESCRIPTION OF THE PREFERRED EMBODIMENTS

The present invention will now be described in more detail.

Examples of the ethylene-$\alpha$-olefin copolymer ruber include rubbers composed mainly of olefins, such as ethylene-propylene copolymer rubbers and ethylene-propylene-nonconjugated diene copolymer rubbers. Examples of the nonconjugated diene include dicyclopentadiene, ethylidenenorbornene, 1,4-hexadiene, cyclooctadiene and methylene-norbornene. Among others, an ethylene-propylene-ethylidenenorbornene rubber (hereinafter referred to as "EPDM") is preferred, as the use of this rubber enables a molded article having an excellent, for example, heat resistance and tensile properties, to be obtained.

The Mooney viscosity (Mooney viscosity measured at 100°C according to ASTM D-927-57T ($ML_{1+4}$ at 100°C)) of the ethylene-$\alpha$-olefin copolymer rubber is preferably from 130 to 350, more preferably from 200 to 300.

Also, preferably an oil-extended olefin copolymer rubber comprising an ethylene-$\alpha$-olefin copolymer rubber, and added thereto, a mineral oil softening agent such as a paraffinic process oil, is used, as this contributes to an improvement in the melt flowability, and at the same time, improves the flexibility of the molded article. The content of the mineral oil softening agent is preferably from 30 to 120 parts by weight, based on 100 parts by weight of the ethylene-$\alpha$-olefin copolymer rubber.

Preferred examples of the polyolefin resin include polypropylene, a copolymer of propylene with ethylene, and a copolymer of propylene with an $\alpha$-olefin other than propylene. In particular, the use of the copolymer of propylene with butene enables the hardness of the molded article to be lowered.

When the melt flow rate of the polyolefin resin (MFR measured at 230°C under a load of 2.16 kg according to JIS (Japanese Industrial Standards) K-7210) is less than 20 g/10 min, it becomes difficult for powder particles to melt and adhere to each other during the powder molding, and thus the strength of the molded article is lowered. Accordingly, the MFR of the polyolefin resin used is preferably 20 g/10 min or more, more preferably 50 g/10 min or more.

In the present invention, the thermoplastic elastomer comprises a composition composed of the above-mentioned ethylene-$\alpha$-olefin copolymer rubber and the above-mentioned polyolefin resin, or a partially crosslinked composition produced by dynamically crosslinking the above-mentioned composition. Preferably, the weight ratio of the ethylene-$\alpha$-olefin copolymer rubber to the olefin resin is from 5 : 95 to 80 : 20, more preferably 20 : 80 to 80 : 20.

In the dynamic crosslinking, preferably an organic peroxide is employed as a crosslinking agent, and preferably a dialkyl peroxide is used as the organic peroxide. Also, preferably the dynamic crosslinking is conducted in the presence of a crosslinking coagent, such as a bismaleimide compound, through the use of a very small amount of an organic peroxide. This enables the ethylene-$\alpha$-olefin copolymer to be adequately crosslinked, whereby a heat resistance is imparted thereto, and at the same time, a high flowability is realized.

The crosslinking agent is used in an amount of 1.5 parts by weight or less, preferably 0.6 part by weight or less, based on 100 parts by weight of the composition comprising an ethylene-$\alpha$-olefin copolymer rubber and a polyolefin resin, and the organic peroxide is used in an amount of 0.2 part by weight or less, preferably 0.1 part by weight or less, more preferably 0.07 part by weight or less.

A continuous kneading extruder, such as a single screw kneading extruder or a twin screw kneading extruder, is preferably used as the apparatus for the dynamic crosslinking. When a twin screw kneading extruder is used, an extrusion crosslinking at a shear rate of less than $10^3$ sec$^{-1}$ causes the diameter of the dispersed particles of the ethylene-$\alpha$-olefin copolymer rubber to become so large that it unpreferably causes a poor appearance of product. Accordingly, preferably the continuous extrusion crosslinking is conducted at a shear rate of $10^3$ sec$^{-1}$ or more.

The thermoplastic elastomer according to the present invention has a complex dynamic viscosity $\eta^*(1)$, when measured at a frequency of 1 radian/sec and 250°C, of $1.5 \times 10^4$ Pa.s ($1.5 \times 10^5$ poise) or less, preferably $1.0 \times 10^4$ Pa.s ($1.0 \times 10^5$ poise) or less, more preferably $3.0 \times 10^3$ Pa.s ($3.0 \times 10^4$ poise) or less.

When the complex dynamic viscosity $\eta^*(1)$ exceeds $1.5 \times 10^4$ Pa.s ($1.5 \times 10^5$ poise), the elastomer powder prepared by using such an elastomer composition will not be melted and adhered to the mold surface, and thus it becomes difficult to conduct a molding by powder molding wherein the shear rate during the molding is very small, i.e., $1 \text{ sec}^{-1}$ or less.

The Newtonian viscosity index n, calculated from the following formula by using the above-mentioned complex dynamic viscosity $\eta^*(1)$ and the complex dynamic viscosity $\eta^*(100)$ measured at a frequency of 100 radian/sec and at 250°C, is 0.67 or less, preferably 0.60 or less, and more preferably 0.53 or less.

$$n = (\log\eta^*(1) - \log\eta^*(100))/2.$$

When the Newtonian viscosity index n exceeds 0.67, even though the complex dynamic viscosity $\eta^*(1)$ is $1.5 \times 10^4$ Pa.s ($1.5 \times 10^5$ poise) or less, measured at a frequency of 1 radian/sec, the dependence on the frequency of the complex dynamic viscosity on the frequency becomes greater. In this case, in a molding method such as powder molding wherein the shaping pressure during the molding is very small, i.e., $0.98 \times 10^5$ Pa ($1 \text{ kg/cm}^2$) or less, the mutual thermal fusion between melted elastomer powder particles becomes incomplete, and thus only a molded article having low mechanical properties can be obtained.

The elastomer composition in the present invention can be formed into an elastomer composition having an excellent flexibility, by blending an uncrosslinked ethylene-$\alpha$-olefin copolymer rubber or ethylene-$\alpha$-olefin copolymer resin in an amount of 50 parts by weight or less based on 100 parts by weight of the partially crosslinked type elastomer composition. As the $\alpha$-olefin used in this case, propylene and butene, etc., are used alone or in a combination thereof. An ethylene-propylene copolymer rubber having an ethylene content of 40 to 90 % by weight, preferably 70 to 85 % by weight and a $ML_{1+4}$ at 100°C of 50 or less is particularly preferred.

The thermoplastic elastomer powder is produced by pulverizing the above-mentioned thermoplastic elastomer composition, for example, at a glass transition temperature or less. The average particle diameter is preferably from 100 to 300 $\mu m$.

The thermoplastic elastomer powder composition according to the present invention is characterized by comprising the above-mentioned thermoplastic elastomer powder and a particular amount of a fine powder. The average particle diameter of the fine powder is preferably 30 $\mu m$ or less, more preferably from 0.01 to 10 $\mu m$. When the average particle diameter exceeds 30 $\mu m$, a good powder flowability cannot be maintained during a storage for a long time.

Examples of the fine powder include organic pigments, such as azo, phthalocyan, indanthrene and dye lake pigments, inorganic pigments such as oxide pigments, e.g., titanium oxide, chromomolybdic acid, sulfide selenium compound, ferrocyanide and carbon black pigments; and powders such as a vinyl chloride resin for a paste, aluminum oxide, aluminum hydroxide and calcium carbonate. Among them, the pigments are preferred because they can maintain a good powder flowability and color the molded article even when used in a small amount, which enables the subsequent coloring step to be omitted.

The content of the fine powder is 0.05 to 20 parts by weight, preferably 0.1 to 8 parts by weight, more preferably 0.1 to 4 parts by weight, based on 100 parts by weight of the thermoplastic elastomer powder. When the content is less than 0.05 part by weight, it becomes difficult to maintain a good powder flowability during a storage for a long time, and when the content exceeds 20 parts by weight, it is possible to prepare a molded article having a sufficiently high strength obtained from the thermal fusing between powder particles.

There is no particular limitation on the method of incorporating the fine powder in the thermoplastic elastomer powder, as long as the fine powder can be homogeneously dispersed, and examples of such a method include one wherein blending is conducted through the use of a blender provided with a heating jacket, a high-speed rotary mixer or the like. Among others, a method, for example, using a super mixer, wherein the fine powder is homogeneously dispersed while preventing a mutual fusion between powder particles by applying a shearing force is preferred. Further, the fine powder may be added while heating to an extent such that a mutual adhesion of the powder particles occurs.

Further, the elastomer powder composition according to the present invention can contain an internally adding release agent. The internally adding release agent is preferably a methylpolysiloxane compound, and the incorporation thereof in an amount of 2 parts by weight or less based on 100 parts by weight of the elastomer powder composition is effective. In this case, the release agent may be added at any stage before or after the purverization. The viscosity at 25°C of the methylpolysiloxane compound may be 2 x

$10^{-5}$ m²/s (20 cSt) or more, preferably in the range of from 5 x $10^{-5}$ to 5 x $10^{-3}$ m²/s (50 to 5000 cSt). When the viscosity becomes too large, the effect of the release agent is decreased, and when the amount of the internally adding release agent is larger than 2 parts by weight, the thermal fusion between elastomer powder particles is inhibited, and thus only a molded article having poor mechanical properties can be obtained. Further, in this case, the internally adding release agent bleeds out onto the surface of the mold, and thus unfavorably contaminates the mold.

Further, the elastomer powder composition of the present invention may contain necessary amounts of known heat-resistant stabilizers such as phenol type, sulfite type, phenylalkane type, phosphite type, amine type or amide type stabilizers, antioxidants, weathering resistant stabilizers, antistatic agents, metal soaps, lubricants such as waxes, and pigments for coloration.

The above-mentioned elastomer powder composition has an excellent powder flowability and can be easily melted by heat fed from the mold, at a low shear rate under a low pressure, and thus is an excellent composition for a powder molding, for example, fluidized bed coating, immersion, electrostatic coating, powder flame spray coating, powder rotational molding and powder slush molding, and is an especially excellent composition for a powder slush molding (see Japanese Unexamined Patent Publication (Kokai) No. 58-132507).

In the powder molding, there is no particular limitation on a system for heating a mold, and examples of the heating system include a gas-fired furnace system, a heat medium oil circulation system, a system of dipping into a heated oil or a hot fluidized sand and a high-frequency induction heating system.

The elastomer powder composition of the present invention exhibits an excellent powder flowability even when stored for a long time. Further, when the powder composition of the present invention is used, it becomes possible to produce a molded article having an even thickness and free from pinholes, even when the powder molding is continuously conducted for a long time, and further, it becomes possible to produce a lightweight and non-pollutive molded article.

The molded article of the present invention can be used, for example, as a covering material for domestic electric appliances, office devices, chairs, and furniture, etc., particularly as an interior covering material in the automobile field for instrument panels, console boxes, arm rests, and door rims, etc.

EXAMPLES

The present invention will now be described in more detail with reference to the following Examples, to which it is in no way limited.

The dynamic viscoelasticity, powder properties, and moldability were determined by the following methods.

Dynamic viscoelascticity of thermoplastic elastomer

The dynamic viscoelasticities at vibration frequencies of 1 radian/sec and 100 radian/sec were measured by using a dynamic analyzer Model DRS-7700 manufactured by Rheometrics Co., and the complex dynamic viscosities $\eta^*(1)$ and $\eta^*(100)$ were calculated.

The measurement was conducted in the parallel plate mode under the conditions of an applied strain of 5 % and a sample temperature of 250°C.

The Newtonian viscosity index n was calculated according to the following equation, based on the results of $\eta^*(1)$ and $\eta^*(100)$.

$$n = (\log\eta^*(1) - \log\eta^*(100))/2.$$

Flowability of powder

The elastomer powder composition was allowed to stand in an atmosphere of 25°C for one month, and thereafter, 100 ml of the elastomer powder composition was charged to a funnel of a bulk specific gravity measuring device as specified in JIS K-6721. The dumper was withdrawn, and the time (sec) from the start of powder dropping until all the powder had dropped was measured. The shorter the time, the better the powder flowability.

Blocking tendency

The elastomer powder composition was allowed to stand in an atmosphere of 25°C for one month, while a pressure of 4900 N/m$^2$ (500 kg/m$^2$) was applied to the powder composition. Thereafter, the powder composition was gently transferred on to a 32-mesh sieve of a Tyler standard screen scale sieve, the sieve was shaken for 10 sec, and the percentage (% by weight) of powder remaining on the 32-mesh sieve was calculated. The lower the percentage (% by weight), the lower the liability of the elastomer powder composition to cause blocking.

Moldability of powder

First, 500 g of the elastomer powder composition was sprinkled over an embossed nickel plate having a size of 30 cm x 30 cm and a thickness of 3 mm, and having a surface heated at 250°C, and adhered thereto for 14 sec, and then unadhered powder of the elastomer powder was discharged and the powder-adhered embossed plate was heated and melted in a heating furnace having an atmosphere of 280°C for 60 sec. The powder moldability was evaluated, according to the following standards, from the fused state of the powder on the mold, and the properties of the molded sheet obtained by demolding after cooling the mold to 70°C with water.
+ + : sufficient mutual fusion between powder particles of the composition is observed, and tensile strength of the molded sheet was sufficiently high.
+ : sufficient mutual fusion between powder particles of the composition is observed, and tensile strength of resultant molding sheet was high.
±: although mutual fusion between powder particles of the composition observed, molded sheet had a low tensile strength and was fragile.
-: powder particles of the composition were not mutually fused, and as such, remained on the mold.
+ + and + mean that the powder composition can be molded into a final product , and ± and - mean that the powder composition cannot be molded into a final product.

Reference Example 1

A 40 parts by weight amount of an oil-extended EPDM ($ML_{1+4}$ at 100°C = 53) comprising 100 parts by weight of EPDM ($ML_{1+4}$ at 100°C = 242, propylene content = 28 % by weight, and iodine value = 12), and added thereto, 100 parts by weight of a mineral oil softening agent (Diana Process® PW-380 manufactured by Idemitsu Kosan Co., Ltd.), was kneaded with 60 parts by weight of a propylene-butene random copolymer resin (butene content = 24 % by weight, MFR = 90 g/10 min) and 0.4 part by weight of a crosslinking coagent (Sumifine® BM-bismaleimide compound manufactured by Sumitomo Chemical Co., Ltd.) for 10 min, by a Banbury mixer, and fed into an extruder to form a masterbatch (hereinafter referred to as "M.B.") in a pellet form for crosslinking.
To 100 parts by weight of the M.B. was added 0.04 part by weight of an organic peroxide [Sanperox® APO (2,5-dimethyl-2,5-di(t-butylperoxyno)hexane manufactured by Sanken Chemical Co., Ltd.], and a dynamic crosslinking was conducted at 220°C by using a twin screw kneader (TEX®-44 manufactured by The Japan Steel Works, Ltd.) to give a pellet having an elastomer composition. The pellet was cooled to a temperature of -100°C, by liquid nitrogen, and then freeze-pulverized to obtain a thermoplastic elastomer powder having a complex dynamic viscosity $\eta^*(1)$ of 7 x 10$^2$ Pa.s (7 x 10$^3$ poise) and a Newtonian viscosity index n of 0.39.

Example 1

A 100 parts by weight amount of the thermoplastic elastomer powder prepared in Reference Example 1 was dry-blended with 0.1 part by weight of a black pigment (PV-817 having an average particle diameter of 0.02 $\mu$m manufactured by Sumika Color Co., Ltd.) by a supermixer, at 25°C and 500 rpm for 10 min, to give a thermoplastic elastomer powder composition for powder molding.
The properties and moldability of the composition thus obtained were evaluated, and the results are shown in Table 1.

Example 2

A thermoplastic elastomer powder composition for powder molding was prepared in the same manner as in Example 1, except that the amount of black pigment added was changed to 1.5 parts by weight. The evaluation results are shown in Table 1.

Example 3

A thermoplastic elastomer powder composition for powder molding was prepared in the same manner as in Example 1, except that the amount of black pigment added was changed to 10 parts by weight. The evaluation results are shown in Table 1.

Example 4

A thermoplastic elastomer powder composition for powder molding was prepared in the same manner as in Example 2, except that a red pigment (PV-110 having an average particle diameter of 0.18 $\mu$m manufactured by Sumika Color Co., Ltd.) was used instead of the black pigment. The evaluation results are shown in Table 1.

Example 5

A thermoplastic elastomer powder composition for powder molding was prepared in the same manner as in Example 2, except that a yellow pigment (PV-354 having an average particle diameter of 0.13 $\mu$m manufactured by Sumika Color Co., Ltd.) is used instead of the black pigment. The evaluation results are shown in Table 1.

Example 6

A thermoplastic elastomer powder composition for powder molding was prepared in the same manner as in Example 2, except that a white pigment (PV-742 having an average particle diameter of 0.2 $\mu$m manufactured by Sumika Color Co., Ltd.) was used instead of the black pigment. The evaluation results are shown in Table 1.

Example 7

A thermoplastic elastomer powder composition for powder molding was prepared in the same manner as in Example 2, except that aluminum oxide (AM-21 having an average particle diameter of 5 $\mu$m manufactured by Sumitomo Chemical Co., Ltd.) was used instead of the black pigment. The evaluation results are shown in Table 1.

Example 8

A thermoplastic elastomer powder composition for powder molding was prepared in the same manner as in Example 2, except that aluminum oxide (AES-12 having an average particle diameter of 0.4 $\mu$m manufactured by Sumitomo Chemical Co., Ltd.) was used instead of the black pigment. The evaluation results are shown in Table 1.

Example 9

A thermoplastic elastomer powder composition for powder molding was prepared in the same manner as in Example 2, except that vinyl chloride for a paste (PxQLT having an average particle diameter of 1.2 $\mu$m manufactured by Sumitomo Chemical Co., Ltd.) was used instead of the black pigment. The evaluation results are shown in Table 1.

Example 10

A thermoplastic elastomer powder composition for powder molding was prepared in the same manner as in Example 2, except that vinyl chloride for a paste (having an average particle diameter of 0.08 $\mu$m

manufactured by Sumitomo Chemical Co., Ltd.) was used instead of the black pigment. The evaluation results are shown in Table 1.

Comparative Example 1

A thermoplastic elastomer powder composition for powder molding was prepared in the same manner as in Example 1, except that no black pigment was used. The evaluation results are shown in Table 1.

Comparative Example 2

A thermoplastic elastomer powder composition for powder molding was prepared in the same manner as in Example 1, except that the black pigment was used in an amount of 25 parts by weight. The evaluation results are shown in Table 1.

Comparative Example 3

A thermoplastic elastomer powder composition for powder molding was prepared in the same manner as in Example 2, except that aluminum oxide (A-21 having an average particle diameter of 50 $\mu$m manufactured by Sumitomo Chemical Co., Ltd.) was used instead of the black pigment. The evaluation results are shown in Table 1.

Examples 11 to 16

Thermoplastic elastomer powder compositions for powder molding were prepared in the same manner as in Example 1, except that the black pigment was used in an amount (parts by weight) specified in Table 2. The evaluation results are shown in Table 2.

Comparative Example 4

A thermoplastic elastomer powder was prepared in the same manner as in Reference Example 1, except that the oil-extended EPDM was used in an amount of 70 parts by weight and 30 parts by weight of a propylene-ethylene random copolymer resin (ethylene content = 3 % by weight, MFR = 1.2 g/10 min) was used instead of the propylene-butene random copolymer resin.

The powder had a $\eta^*(1)$ value of 1.9 x $10^4$ Pa.s (1.9 x $10^5$ poise) and a Newtonian viscosity index n of 0.69.

This powder was subjected to the same treatment as that of Example 1, to give a thermoplastic elastomer powder composition. The evaluation results are shown in Table 2.

Example 17

A thermoplastic elastomer powder composition for powder molding was prepared in the same manner as in Example 1, except that 0.22 part by weight of a black pigment, 0.53 part by weight of a red pigment (PV-110 manufactured by Sumika Color Co., Ltd.), 1.15 parts by weight of a yellow pigment (PV-354 manufactured by Sumika Color Co., Ltd.), and 0.05 part by weight of a white pigment (PV-742 manufactured by Sumika Color Co., Ltd.) were used as the fine powder. The evaluation results are shown in Table 3.

Examples 18 and 19

The thermoplastic elastomer powder compositions prepared in the same manner as in Example 17 were respectively allowed to stand in a Geer oven at 40°C and 60°C for 8 hr, and then subjected to an evaluation of the powder flowability and powder moldability thereof. The evaluation results are shown in Table 3.

Example 20

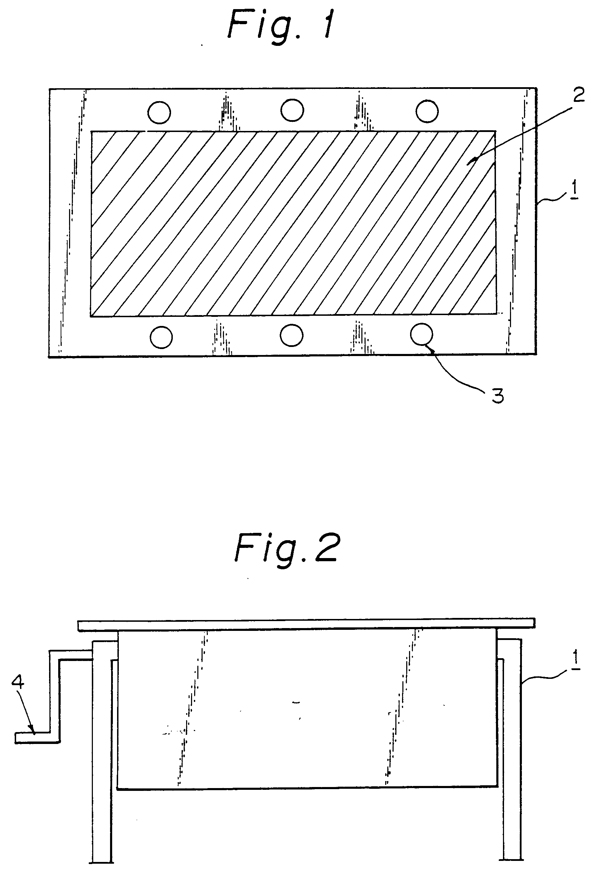

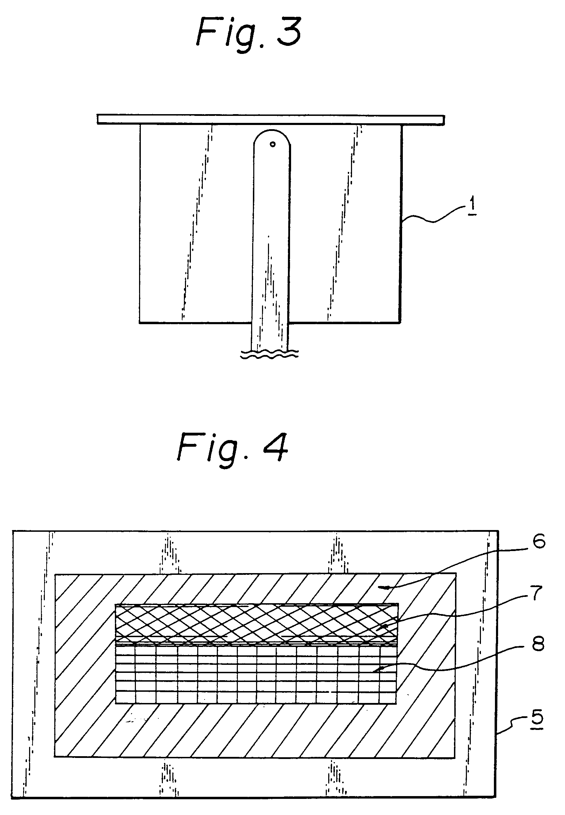

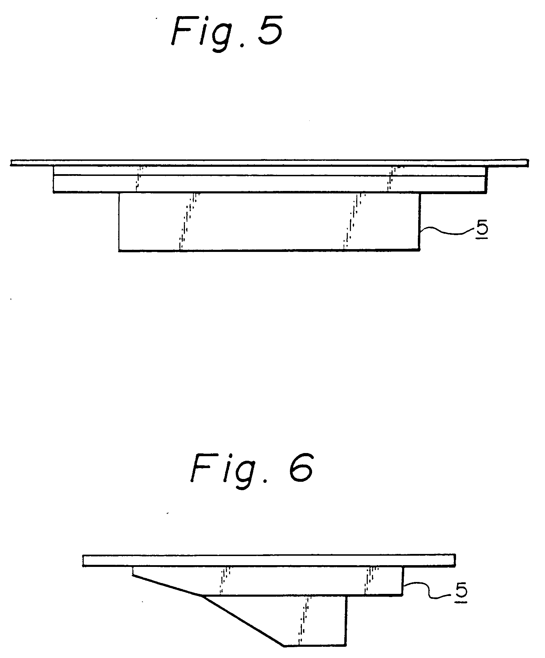

A 4 kg amount of the thermoplastic elastomer powder composition prepared in Example 2 was put in a stainless steel rectangular container (i.e., a powder feed box) 1 shown in Figs. 1 to 3. The rectangular container had a rectangular opening 2 having a size of 600 mm x 220 mm and a depth of 210 mm and was mounted on a single screw rotary device 4. A nickel electroformed mold 5 shown in Figs. 4 to 6, provided with an opening 6 having the same size as that of the opening 2 shown in Fig. 1, was preheated in a gas oven at 300°C. This mold had a thickness of 3 mm and a complicated configuration such that the internal surface had a rope pattern 7 and a leather grain pattern 8. Immediately after the surface temperature of the mold reached 250°C, the heated mold was aligned with the opening 2 of the above-mentioned feed box 1 in such a manner that the opening 6 (600 mm x 220 mm) faced downward and an outer frame mounted around both openings was brought into close contact therewith, and the mold and box were then integrally fixed together by a clip 3. The device was immediately clockwise rotated by two turns at 30 rpm. and then counterclockwise rotated by two turns at 30 rpm. Thereafter, the device was clockwise shaken once through an angle of about 120° and counterclockwise shaken once through an angle of about 120°, to shake off excess powder deposited on the portion having a complicated configuration.

The rotation and shaking operation was stopped such that the opening 6 of the mold faced downward, the mold then taken out of the powder feed box, heated in a heating oven at 280°C for one min. and cooled with water, and the molded film removed from the mold.

The resultant film as the molded article had a weight of 150 g and a thickness of 0.9 to 1.1 mm, and was free from underfill, and the rope pattern 7 and the leather grain pattern 8 were exactly reproduced. Further, in the molded article, a minute portion of the mold having a complicated configuration was properly reproduced, and the article had an even thickness and was free from pinholes.

A 3.8 kg amount of an elastomer powder composition free from the inclusion of foreign matter was recovered in the container, and an unused elastomer powder composition was added to the recovered elastomer powder composition, to a total weight of 4 kg, and the mixture molded in the same manner as described above. The resultant molded article had an excellent appearance and an even thickness.

Table 1

| Ex. No. | Powder Flowability (sec) | Blocking Tendency (%) | Powder Moldability |
|---------|--------------------------|-----------------------|--------------------|
| Ex. 1 | 20 | 1.1 | + + |
| Ex. 2 | 17 | 0.9 | + + |
| Ex. 3 | 22 | 0.9 | + |
| Ex. 4 | 21 | 1.3 | + + |
| Ex. 5 | 20 | 1.4 | + + |
| Ex. 6 | 17 | 0.9 | + + |
| Ex. 7 | 22 | 1.6 | + + |
| Ex. 8 | 21 | 1.6 | + + |
| Ex. 9 | 22 | 1.0 | + + |
| Ex. 10 | 22 | 0.9 | + + |
| Comp.Ex.1 | 40 | 10 | + + |
| Comp.Ex.2 | 29 | 1.0 | ± |
| Comp.Ex.3 | 38 | 6.0 | + + |

Table 2

| Ex. No. | Amount of Addition (pt.wt.) | Powder Flowability (sec) | Powder Moldability |
|---|---|---|---|
| Ex. 11 | 3.0 | 17 | + + |
| Ex. 12 | 4.0 | 17 | + + |
| Ex. 13 | 5.0 | 19 | + |
| Ex. 14 | 8.0 | 21 | + |
| Ex. 15 | 15 | 24 | + |
| Ex. 16 | 20 | 25 | + |
| Comp.Ex.4 | 1.5 | 17 | - |

Table 3

| Ex. No. | Temp. (°C) | Powder Flowability (sec) | Powder Moldability |
|---|---|---|---|
| Ex. 17 | 25 | 19 | + + |
| Ex. 18 | 40 | 18 | + + |
| Ex. 19 | 60 | 17 | + + |

## Claims

1. A thermoplastic elastomer powder composition for powder molding, comprising 100 parts by weight of a thermoplastic elastomer powder (A) and 0.05 to 20 parts by weight of a fine powder having an average particle diameter of 30 $\mu$m or less, wherein the powder (A) comprises either (i) a powder of a thermoplastic elastomer comprising a composition composed of an ethylene-$\alpha$-olefin copolymer rubber and a polyolefin resin or (ii) a powder of a thermoplastic elastomer comprising a partially crosslinked composition composed of an ethylene-$\alpha$-olefin copolymer rubber and a polyolefin resin, the powder (A) has a complex dynamic viscosity $\eta^*(1)$ of $1.5 \times 10^4$ Pa.s ($1.5 \times 10^5$ poise) or less as measured at a frequency of 1 radian/sec and at 250°C, and a Newtonian viscosity index n of 0.67 or less as calculated from the formula

$$n = (\log\eta^*(1) - \log\eta^*(100))/2$$

by using the above-mentioned complex dynamic viscosity $\eta^*(1)$ and the complex dynamic viscosity $\eta^*(100)$ measured at a frequency of 100 radian/sec.

2. A composition according to claim 1 wherein the content of the fine powder is from 0.1 to 8 parts by weight, based on 100 parts by weight of the powder (A).

3. A composition according to claim 2 wherein the content of the fine powder is from 0.1 to 4 parts by weight, based on 100 parts by weight of the powder (A).

4. A composition according to claims 1 to 3 wherein the average particle diameter of the fine powder is from 0.01 to 10 $\mu$m.

5. A composition according to any one of claims 1 to 4 wherein the fine powder is at least one member selected from the group consisting of pigments, vinyl chloride resins and aluminium oxides.

6. A composition according to any one of claims 1 to 5 wherein the ethylene-α-olefin copolymer rubber is an ethylene-propylene-ethylidene-norbornene rubber.

7. A composition according to any one of claims 1 to 6 wherein the ethylene-α-olefin copolymer rubber has a Mooney viscosity $ML_{1+4}$ (100°C) of from 130 to 350.

8. A composition according to any one of claims 1 to 7 wherein the ethylene-α-olefin copolymer rubber is an oil-extended olefin copolymer rubber.

9. A composition according to any one of claims 1 to 8 wherein the polyolefin resin is polypropylene, a copolymer of propylene with ethylene or a copolymer of propylene with butene.

10. A composition according to any one of claims 1 to 9 comprising an ethylene-α-olefin copolymer rubber and an olefin resin in a weight ratio of 5 : 95 to 80 : 20.

11. Use of a composition according to any one of claims 1 to 10 in powder moulding.

12. A moulded article formed of a composition according to any one of claims 1 to 10.

**Patentansprüche**

1. Thermoplastischer Elastomer-Pulversatz zur Pulverformung, umfassend 100 Gewichtsteile eines thermoplastischen Elastomerpulvers (A) und 0,05 bis 20 Gewichtsteile eines feinen Pulvers mit einem mittleren Teilchendurchmesser von 30 μm oder weniger, worin das Pulver (A) entweder (i) ein Pulver eines thermoplastischen Elastomers umfaßt, welches eine Zusammensetzung umfaßt, die aus einem Ethylen-α-Olefin-Copolymerkautschuk und einem Polyolefinharz gebildet ist, oder (ii) ein Pulver eines thermoplastischen Elastomers, welches eine teilweise vernetzte Zusammensetzung umfaßt, die aus einem Ethylen-α-Olefin-Copolymerkautschuk und einem Polyolefinharz gebildet ist, umfaßt, worin das Pulver (A) eine komplexe dynamische Viskosität $\eta^*(1)$ von 1,5 x $10^4$ Pa•s (1,5 x $10^5$ Poise) oder weniger, gemessen bei einer Frequenz von 1 rad/s und bei 250°C, und einen Newton'schen Viskositätsindex n von 0,67 oder weniger, berechnet durch die Formel

$$n = (\log\eta^*(1) - \log\eta^*(100))/2$$

unter Verwendung der oben erwähnten komplexen dynamischen Viskosität $\eta^*(1)$ und der komplexen dynamischen Viskosität $\eta^*(100)$, gemessen bei einer Frequenz von 100 rad/s, besitzt.

2. Zusammensetzung nach Anspruch 1, worin der Gehalt an feinem Pulver zwischen 0,1 bis 8 Gewichtsteilen, basierend auf 100 Gewichtsteilen des Pulvers (A) beträgt.

3. Zusammensetzung nach Anspruch 2, worin der Gehalt an feinem Pulver zwischen 0,1 bis 4 Gewichtsteilen, basierend auf 100 Gewichtsteilen des Pulvers (A), beträgt.

4. Zusammensetzung nach den Ansprüchen 1 bis 3, worin der mittlere Teilchendurchmesser des feinen Pulvers 0,01 bis 10 μm beträgt.

5. Zusammensetzung nach einem der Ansprüche 1 bis 4, worin das feine Pulver wenigstens ein Glied, ausgewählt aus der Gruppe, bestehend aus Pigmenten, Vinylchloridharzen und Aluminiumoxiden ist.

6. Zusammensetzung nach einem der Ansprüche 1 bis 5, worin der Ethylen-α-Olefin-Copolymerkautschuk ein Ethylen-Propylen-Ethyliden-Norbornenkautschuk ist.

7. Zusammensetzung nach einem der Ansprüche 1 bis 6, worin der Ethylen-α-Olefin-Copolymerkautschuk eine Mooney-Viskosität $ML_{1+4}$ (100°C) von 130 bis 350 besitzt.

8. Zusammensetzung nach einem der Ansprüche 1 bis 7, worin der Ethylen-α-Olefin-Copolymerkautschuk ein Öl-verstreckter Olefin-Copolymerkautschuk ist.

**9.** Zusammensetzung nach einem der Ansprüche 1 bis 8, worin das Polyolefinharz Polypropylen, ein Copolymer von Propylen mit Ethylen oder ein Copolymer von Propylen mit Buten ist.

**10.** Zusammensetzung nach einem der Ansprüche 1 bis 9, welche einen Ethylen-α-Olefin-Copolymerkautschuk und ein Olefinharz in einem Gewichtsverhältnis von 5:95 bis 8:20 umfaßt.

**11.** Verwendung einer Zusammensetzung nach einem der Ansprüche 1 bis 10 beim Pulverformen.

**12.** Geformter Gegenstand, gebildet aus einer Zusammensetzung nach einem der Ansprüche 1 bis 10.

## Revendications

**1.** Composition en poudre d'élastomère thermoplastique pour le moulage en poudre, comprenant 100 parties en poids d'une poudre d'élastomère thermoplastique (A) et 0,05 à 20 parties en poids d'une poudre fine ayant un diamètre moyen de particules de 30 $\mu$m ou moins, dans laquelle la poudre (A) comprend soit (i) une poudre d'un élastomère thermoplastique comprenant une composition composée d'un caoutchouc de copolymère éthylène-α-oléfine et d'une résine de polyoléfine soit (ii) une poudre d'un élastomère thermoplastique comprenant une composition partiellement réticulée composée d'un caoutchouc de copolymère éthylène-α-oléfine et d'une résine de polyoléfine, la poudre (A) a une viscosité dynamique complexe $\eta^*(1)$ de $1,5 \times 10^4$ Pa.s ($1,5 \times 10^5$ poise) ou moins mesurée à une fréquence de 1 radian/s et à 250°C et un indice de viscosité newtonien n de 0,67 ou moins calculé d'après la formule :

$$n = (\log\eta^*(1) - \log\eta^*(100))/2$$

en utilisant la viscosité dynamique complexe $\eta^*(1)$ citée ci-dessus et la viscosité dynamique complexe $\eta^*(100)$ mesurée à une fréquence de 100 radian/s.

**2.** Composition selon la revendication 1, dans laquelle la teneur en poudre fine est de 0,1 à 8 parties en poids pour 100 parties en poids de la poudre (A).

**3.** Composition selon la revendication 2, dans laquelle la teneur en poudre fine est de 0,1 à 4 parties en poids pour 100 parties en poids de la poudre (A).

**4.** Composition selon les revendications 1 à 3, dans laquelle le diamètre moyen de particules de la poudre fine est de 0,01 à 10 $\mu$m.

**5.** Composition selon l'une quelconque des revendications 1 à 4, dans laquelle la poudre fine est au moins un composé choisi parmi les pigments, les résines de chlorure de vinyle et les oxydes d'aluminium.

**6.** Composition selon l'une quelconque des revendications 1 à 5, dans laquelle le caoutchouc de copolymère éthylène-α-oléfine est un caoutchouc éthylène-propylène-éthylidènenorbornène.

**7.** Composition selon l'une quelconque des revendications 1 à 6, dans laquelle le caoutchouc de copolymère éthylène-α-oléfine a une viscosité Mooney $ML_{1+4}$ (100°C) de 130 à 350.

**8.** Composition selon l'une quelconque des revendications 1 à 7, dans laquelle le caoutchouc de copolymère éthylène-α-oléfine est un caoutchouc de copolymère d'oléfine dilué à l'huile.

**9.** Composition selon l'une quelconque des revendications 1 à 8, dans laquelle la résine de polyoléfine est le polypropylène, un copolymère de propylène et d'éthylène ou un copolymère de propylène et de butène.

**10.** Composition selon l'une quelconque des revendications 1 à 9, comprenant un caoutchouc de copolymère éthylène-α-oléfine et une résine d'oléfine dans un rapport pondéral de 5:95 à 80:20.

**11.** Utilisation d'une composition selon l'une quelconque des revendications 1 à 10 dans le moulage en poudre.

**12.** Article moulé formé d'une composition selon l'une quelconque des revendications 1 à 10.

*Fig. 1*

*Fig.2*

# Fig. 3

# Fig. 4

*Fig. 5*

*Fig. 6*